# EUROPEAN PATENT APPLICATION

(11) **EP 1 976 297 A1**
(43) Date of publication of application: **01.10.2008**
(21) Application number: 07006551.1
(22) Date of filing: 29.03.2007
(51) Int. Cl.: H04N 7/24, H04N 5/00

(54) **Method and system for autimatically selecting television channels**

(71) Applicant: Koninklijke KPN N.V., 2516 CK The Hague (NL)
(72) Inventor: Koster, Arian, 3641 - GS Mijdrecht (NL)
(74) Representative: Wuyts, Koenraad Maria

(57) **Abstract**

It is disclosed that in a content distribution system a speech-to-text conversion means (30) can be used for the conversion of at least a part of a particular data stream to text data. The text data can be used for triggering a set-top box (5) to select the particular data stream to which the text data is associated. The text data can be provided to a trigger receiving means (7) that determines whether the text data matches with an entry of a trigger table (4). In the case of a match the set-top box (5) is instructed to select the particular data stream.

## Description

### FIELD OF THE INVENTION

The present invention relates to a method and a system for selecting a particular television channel.

### BACKGROUND OF THE INVENTION

Users that are able to use digital television services often use a set-top box that is connected to their television set. A set-top box usually resides at the user's premise and can be used for selecting one particular data stream out of a collection of data streams that is provided to a device comprised by the access infrastructure of a telecom provider such as a digital subscriber line access multiplexer (DSLAM).

The selection of a particular data stream or television channel can be done by a user via an electronic program guide (EPG). An EPG is an on-screen guide to scheduled broadcast television programs, allowing a user to navigate, select, and discover content by time, title, channel, genre, etc, by use of their remote control, a keyboard or even a phone keypad.

The technology of an EPG is based upon broadcasting data to an application usually residing within middleware in a set-top box which connects to the television set. By navigating through an EPG on a receiving device, users can see more information about the current program and about future programs. Additionally, it may be possible that a user selects via the EPG a particular television channel, for instance by selecting a scheduled television program so that the television channel is selected via which the selected television program is broadcasted.

Typical elements of an EPG comprise a graphical user interface which enable the display of television program titles, descriptive information such as actors, year of production, the channel name and other descriptive metadata. EPG information is an example of metadata. Generally speaking, metadata is information about information. In the case of IP TV, the EPG information provides information about the data streams that are broadcasted. Generally speaking, metadata can be sent within a data stream that is broadcasted or in a special data stream.

However, a drawback of using an EPG is that the user first has to select a particular television program that is listed in order to select a particular television channel, and thus to view this particular television program. For instance, the user has to look up in the EPG information if a certain television program is being broadcasted. If this is the case, the user can select and consequently view the television program.

### AIM OF THE INVENTION

It is an object of the invention to eliminate the drawbacks of the prior art and to provide a method and a system for selecting a particular television channel without selecting first a particular television program via an electronic program guide.

### SUMMARY OF THE INVENTION

In accordance with this invention, a method is disclosed for selecting, by a set-top box, a data stream out of a plurality of data streams that is received by a signal distribution device from a content distribution system via a network, the method comprising the steps of:
- converting at the content distribution system at least a part of a data stream to text data by a sprech-to-text conversion means ;
- providing the text data to a trigger receiving means;
- comparing the text data to the entries of a trigger table that is accessible for the trigger receiving means; and
- in case of a match between the text data and an entry of the trigger table instructing the set-top box to select the data stream.

In a first aspect of the present invention it is disclosed that a speech-to-text conversion means is used for converting a data stream or a part of a data stream into text data. The speech-to-text conversion means is located at or connected to a content distribution system that distributes data streams to Digital Subscriber Line Access Multiplexers (DSLAM's) via a network. The content distribution system can for instance be an IPTV platform. In the latter case services are provided such as digital and/or interactive television.

The invention is not limited to IP networks that are comprised of a copper infrastructure. Also other types of networks are included such as, but not limited to, coax-, satellite-, and fibre-networks. It is also not required that the IP protocol is used. Also other types of communication protocols can be considered such as, but not limited to, SDH and PDH. In other types of networks not a DSLAM may be used as a signal distribution device. For instance in cable networks an edge QAM (Quadrature Amplitude Modulation) device may be used as a signal distribution device.

The speech-to-text conversion means generates text data based on one or more real time data streams that are provided to the speech-to-text conversion means. Additionally, the speech-to-text conversion means may put through the real time data to a video server that is comprised by the content distribution system.

The text data generated by the speech-to-text conversion means is provided to a trigger receiving means that compares the text data to entries of a trigger table. In case of a match between the text data and an entry, one particular or several set-top boxes are instructed to select the data stream that is associated with the text data. As a result a particular data stream is automatically selected by a set-top box so that a user can view a television program that meets his or her needs without actively selecting the television channel via which the television program is broadcasted.

The text data can be included in the meta data that is sent from the content distribution system to one or more set-top boxes. In order to receive meta data, a set-top box may comprise a trigger receiving means. The meta data that is received by the trigger receiving means is analyzed by the trigger receiving means. The text data comprised by the meta data is compared by the trigger receiving means with entries of a trigger table that is also comprised by the set-top box. When a particular text data instance equals a text data entry, the television channel corresponding to that text data entry is automatically selected by the set-top box. As a result, the user is able to watch a television program that meets his interest.

In order to identify the particular data stream from which the text data is extracted, a tag may be added to each instance of text data. This tag is used by the set-top box to determine which data stream, and thus which television channel, is to be selected.

The entries in the trigger table can be added, updated or removed by the user, for instance via an input means such as a remote control. Optionally, it could be possible tor the user to define that when an automatic channel selection has taken place, the selected television channel remains selected during of predefined period of time. This is to prevent automatically selecting another television channel too frequently.

It is also possible that a trigger is generated centrally at the content distribution system instead of in the set-top box. Text data that is generated by the speech-to-text conversion means is then forwarded to the trigger receiving means that is located centrally at the content distribution system. When a text data instance equals an entry of the trigger table, a control signal is sent from the content distribution system to the set-top box. The control signal specifies the television channel associated with the text data instance that matches an entry of the trigger table. After receiving the control signal the set-top box selects the appropriate television channel.

A user may have access to the trigger table in order to specify his or her personal triggers, whether the trigger table is comprised by a set-top box or by the content distribution system. If the trigger table is comprised by the content distribution system, an authorization and authentication mechanism may be implemented in order to allow each user to have access to his or her own personal triggers.

Further, a system for selecting a data stream is disclosed that comprises a speech-to-text conversion means, a trigger receiving means and a trigger table.

Also a set-top box is disclosed that comprises a trigger receiving means and a trigger table.

### BRIEF DESCRIPTION OF THE DRAWING FIGURES

The foregoing aspects and many of the attendant advantages of this invention will become better understood by reference to the following detailed description, when taken in conjunction with the accompanying drawing, wherein:
FIG. 1 is a block diagram illustrating an architecture for providing digital television services to a user.
FIG. 2 is a block diagram depicting a possible embodiment of the present invention.

### EXEMPLARY EMBODIMENTS

For the purpose of teaching of the invention, preferred embodiments of the method and devices of the invention are described in the sequel. It will be apparent to the person skilled in the art that other alternative and equivalent embodiments of the invention can be conceived and reduced to practice without departing from the true spirit of the invention, the scope of the invention being limited only by the appended claims as finally granted.

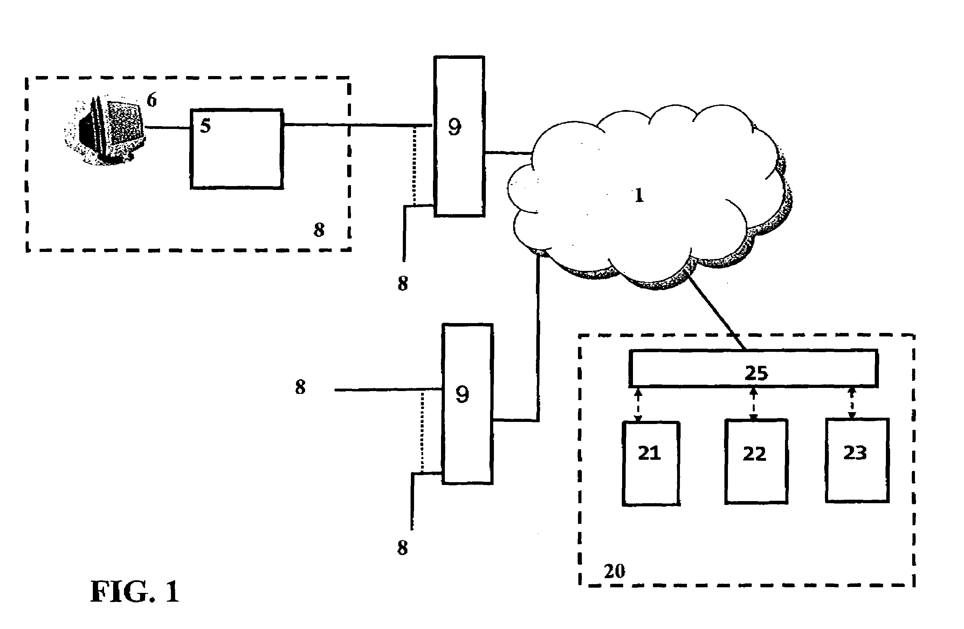

In FIG. 1 an IP based network (1) is depicted via which digital television services can be provided to users. The IP based network (1) can be based on any type of communication technology, such as FTTH (fiber to the home), copper, ADSL or VDSL. It may also be possible that the IP based network (1) is a mobile network or that the IP based network (1) comprises network segments based on mobile technology.

A content distribution system (20) is connected to the IP based network (1), The content distribution system (20) can for instance be an IP TV platform. In the architecture according to FIG. 1 there is a DSLAM (9) (Digital Subscriber Line Access Multiplexer) that is connected to the IP based network (1) and to a customer environment (8). There can be several customer environments (8) connected to a DSLAM (9), and there can be several DSLAM's (9) connected to the IP based network (1). A television set (6) is connected to a set-top box (STB) (5) for the provisioning of digital and/or interactive television. The set-top box (5) is for instance connected to the DSLAM (9) via a DSL modem.

The content distribution system (20) may comprise a network interface (25) for transmitting content via the IP based network (1) to the set-top box (5). One or more communication protocol stacks can be comprised by the network interface (25) to enable a proper communication path to be established between the content distribution system (20) and the set-top box (5). For instance, the content can be transmitted via the IP based network by means of streaming data (for instance one data stream per television channcl).

Several types of distribution concepts may be used such as broadcasting or multicasting. The content distributions system (20) may also comprise one or more media servers (21, 22, 23) on which video and audio content is residing. It is also possible that the media servers (21, 22, 23) arc provided with real-time content from an external source. This is for example the case for live television programs. Several configurations may be possible, for instance one server can be comprised by the content distribution system (20) for each television channel that is broadcasted.

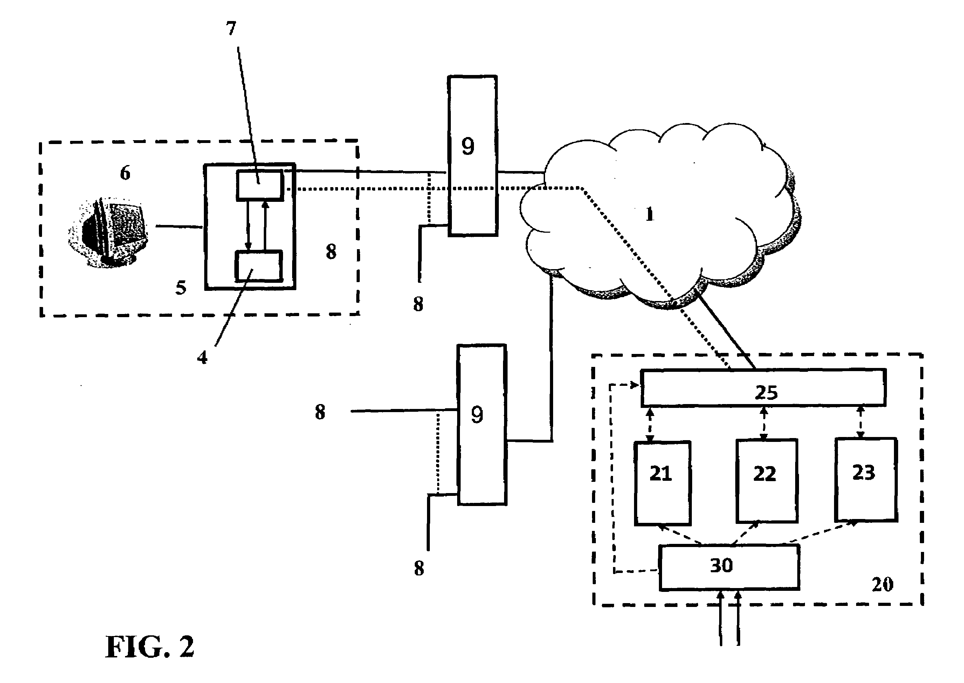

According to the present invention a speech-to-text conversion means (30) is used to convert a data stream or a part of a data stream into text data. This is depicted in FIG. 2 For the situation that real time content is broadcasted via the content distribution system (20), which may be the case for a live television program. The real time data stream provided to the speech-to-text conversion means (30) comprises audio data and often also video data. The speech-to-text conversion means (30) generates text data based on the audio data comprised by the real time data. Additionally, the speech-to-text conversion means (30) puts through the real time data to a video server (21, 22, 23).

Several configurations may be possible with respect to the positioning of the speech-to-text conversion means (30). The speech-to-text conversion means (30) may be located as is depicted in FIG. 2. It may also be possible that the speech-to-text conversion means (30) is located between a video server (21, 22, 23) and the network interface (25). In the latter case the speech-to-text conversion means (30) receives a real time data stream from a video server (21, 22, 23) and generates, based on the audio data, text data. Additionally, the real time data stream is put through to the network interface (25). The speech-to-text conversion means (30) may be able to process more than one data stream. For instance, the speech-to-text conversion means (30) may receive a data stream from each of the video servers (21, 22, 23). For each data stream text data is then generated.

The present invention is however not limited to the broadcasting of real time data streams. Also data streams for prerecorded content are taken into account.

The text data generated by the speech-to-text conversion means (30) can be used to be included by meta data, i.e. the text data is sent as meta data from the content distribution system to the set-top boxes (5). This meta data may comprise text data that is related to one or more data streams. A set-top box (5) that receives the meta data can be triggered by a particular text element (for instance a name, a term or a phrase) resulting in selecting, by the set-top box (5), the particular television channel via which the particular text element occurred. For instance, generated text data could comprise the name 'United Nations'. The name 'United Nations' can function as a trigger for a set-top box (5) to select the television channel that is associated with the text data that comprises this name. In this way, a television channel can be automatically selected according to the interest of a user. For this purpose the user may be able to define one or more names, terms or phrase in the set-top box (5) that causes the set-top box (5) to trigger and thus to select the related television channel.

The meta data may thus comprise text data that is associated with several television channels. For instance, text data associated with television channel C1 can be comprised as well as text data associated with television channel Cx. In order to detect by the set-top box (5) to which television channel a particular instance of text data is associated, there may be a tag added to each instance of text data. This tag is used by the set-top box (5) to detect the associated television channel. For instance, the tag 'Cx' can be added to the name 'United Nations'. When the text data 'United Nations' is received by a set-top box (5) in the meta data, it triggers the set-top box (5). The set-top box (5) reads the value of tag, in this case 'Cx', and selects automatically television channel Cx.

In order to receive meta data, a set-top box (5) comprises a trigger receiving means (7). The meta data that is provided to the trigger receiving means (7) is analyzed by the trigger receiving means (7). Each instance of text data comprised by the meta data is compared by the trigger receiving means (7) with the entries of a trigger table (4). When a particular text data instance equals a text data entry, the television channel corresponding to that text data entry is automatically selected by the set-top box (5). As a result, the user is able to watch a television program that meets his interest.

The entries in the trigger table (4) can be added, updated or removed by the user, for instance via an input means such as a remote control. Optionally, it could be possible for the user to define that when an automatic channel selection has taken place, the selected television channel remains selected during of predefined period of time. This is to prevent automatically selecting another television channel too frequently.

In another embodiment of the invention, a trigger is generated centrally at the content distribution system (20). Text data that is generated by the speech-to-text conversion means (30) is forwarded to the trigger receiving means (7) that is located in this embodiment centrally at the content distribution system (20). When a text data instance equals an entry of the trigger table (4), a control signal is sent to the set-top box (5). The control signal specifies the television channel associated with the detected text data instance. After receiving the control signal the set-top box selects the appropriate television channel.

Each user may have access to the trigger table (4) in order to specify his/her personal triggers. An entry in the trigger table (4) also has an associated user ID to identify which user(s) has (have) defined the trigger. The user ID is used to determine the set-top box (5) to which the control signal is to be sent.

An advantage of having the trigger receiving means (7) and the trigger table (5) at the content distribution system (20) is that the amount of meta data sent to the set-top boxes (5) is less voluminous.

It may be possible that the set-top box (5) needs a modification in order to be able to contain a trigger receiving means (7) and a trigger table (4). However, set-top boxes (5) are already configured to receive meta data so that in general only minor changes are required.

## Claims

1. A method for selecting, by a set-top box (5), a data stream out of a plurality of data streams that is received by a signal distribution device (9) from a content distribution system (20) via a network (1), the method comprising the steps of:
- converting at the content distribution system (20) at least a part of a data stream to text data by a speech-to-text conversion means (30);
- providing the text data to a trigger receiving means (7);
- comparing the text data to the entries of a trigger table (4) that is accessible for the trigger receiving means (7); and
- in case of a match between the text data and an entry of the trigger table (4) instructing the set-top box (5) to select the data stream.

2. Method according to claim 1, wherein the trigger receiving means (7) and the trigger table (4) are comprised by the set-top box (5) and the text data is sent from the content distribution system (20) to the set-top box (5) as meta data.

3. Method according to claim 1, wherein the trigger receiving means (7) and the trigger table (4) are located at the content distribution system (20) and a control signal is sent to the set-top box (5) in case of a match between the text data and an entry of the trigger table (4).

4. Method according to claim 2, wherein a tag is added to the text data to identify the data stream from which the text data is extracted.

5. System for selecting a data stream out of a plurality of data streams that is,received by a signal distribution device (9) from a content distribution system (20) via a network (1), the system comprising:
- a speech-to-text conversion means (30) for converting at the content distribution system (20) at least a part of a data stream to text data; and
- a trigger receiving means (7) for comparing the text data to the entries of a trigger table (4) and for instructing the set-top box (5) to select the data stream in case of a match between the text data and an entry of the trigger table (4).

6. System according to claim 5, the system further comprising configuration means for updating the entries of the trigger table (4).

7. A set-top box (5) comprising a trigger receiving means (7) for receiving meta data, for comparing the text data included in the meta data to the entries of a trigger table (4), and for selecting a data stream in case of a match between the text data and an entry of the trigger table (4).
